Europäisches Patentamt

European Patent Office

Office européen des brevets

(11) Veröffentlichungsnummer: **0 210 356**
A2

## (12) EUROPÄISCHE PATENTANMELDUNG

(21) Anmeldenummer: 86106607.4

(22) Anmeldetag: 15.05.86

(51) Int. Cl.⁴: **B60C 17/10**

(30) Priorität: 24.07.85 DE 3526429

(43) Veröffentlichungstag der Anmeldung:
04.02.87 Patentblatt 87/06

(84) Benannte Vertragsstaaten:
AT BE CH DE FR GB IT LI LU NL SE

(71) Anmelder: Continental Gummi-Werke
Aktiengesellschaft
Königsworther Platz 1 Postfach 169
D-3000 Hannover 1(DE)

(72) Erfinder: Umland, Henning, Dr.
Barwegskoppel 16
D-2090 Winsen/Luhe(DE)
Erfinder: Fricke, Gerhard
Bärenriegelweg 6
D-8491 Lohberg(DE)

(54) Gleitmittel für ein Fahrzeugrad.

(57) Die Erfindung bezieht sich auf ein Gleitmittel für ein Fahrzeugrad zur Verminderung der Reibung zwischen der Reifeninnenwand und der Felge oder sonstigen Teilen des Fahrzeugrads, das unter anderem Polyglykol und/oder Polyglykoläther enthält. Zur Verbesserung der Eigenschaften des Gleitmittels wird vorgeschlagen, daß Gleitmittel 50 bis 80 Gew.% Polyglykol und/oder Polyglykoläther und weiterhin 50 bis 20 Gew.% einer Metallseife enthält.

*Fig. 1*

EP 0 210 356 A2

## Gleitmittel für ein Fahrzeugrad

Die Erfindung betrifft ein Gleitmittel für ein Fahrzeugrad zur Verminderung der Reibung zwischen der Reifeninnenwand und der Felge oder sonstigen Teilen des Fahrzeugrads, das unter anderem Polyglykol und/oder Polyglykoläther enthält.

In der GB-PS 1 359 467 wird eine ganze Reihe von Stoffen angeführt, die für den Einsatz als Gleitmittel geeignet erscheinen, unter anderem auch Polyglykol. Solche Gleitmittel sollen bekanntlich - schlupfbedingte Schädigungen oder Zerstörungen des Reifens bei einem längeren Fahren ohne Luft verhindern, indem sie die Reibung zwischen der Reifeninnenwand und der Felge oder sonstigen Teilen des Fahrzeugrads bei der Berührung in der Bodenaufstandsfläche verringern und damit einer übermäßigen Wärmeentwicklung entgegentreten.

An solche Gleitmittel für Fahrzeugräder sind unterschiedliche Anforderungen zu stellen. So sollten sie über einen möglichst großen Temperaturbereich eine hohe Viskosität aufweisen. Sie dürfen nicht viel wiegen, um im Rahmen eines energieoptimierten Fahrzeugrads nicht zu stark auf der Negativbilanz zu erscheinen. Weiterhin dürfen sie nicht zu fließfähig sein und müssen genügend stark an der Felge oder am Reifen haften, um eine Gleichverteilung des Gleitmittels über den Radumfang auch bei längeren Standzeiten und im Fahrbetrieb mit den dabei auftretenden hohen Fliehkräften zu gewährleisten.

Von den bekannten Gleitmitteln hat sich keines allgemein durchgesetzt, weil bisher nicht erreicht werden konnte, alle Anforderungen gleichzeitig ausreichend zu erfüllen.

Der Erfindung liegt deshalb die Aufgabe zugrunde, ein verbessertes Gleitmittel für Fahrzeugräder anzugeben.

Diese Aufgabe wird erfindungsgemäß dadurch gelöst, daß das Gleitmittel 50 bis 80 Gew.% Polyglykol und/oder Polyglykoläther und weiterhin 50 bis 20 Gew.% einer Metallseife enthält.

Durch den erfindungsgemäßen Zusatz einer Metallseife zum an sich bekannten Polyglykol wird die Schmierfähigkeit des Gleitmittels entscheidend verbessert. Die angegebenen Gewichtsanteile decken einen Bereich ab, in dem das erhaltene Gleitmittel nicht zu flüssig aber auch nicht zu hart eingestellt ist. Bekanntlich liegt ein reines Polyglykol in flüssiger Phase oder als niedrig - schmelzendes Wachs vor. Durch einen geeigneten Zusatz an Metallseife erhält man ein pastenförmiges Gleitmittel, während bei einem zu hohen Metallseifenanteil das Gleitmittel eine krümelige Konsistenz annehmen würde. Als besonders günstig hat sich ein Gleitmittel herausgestellt, bei dem das Gewichtsverhältnis zwischen einem niedermolekularen Polyglykol und der Metallseife einen Wert von etwa 7 : 3 annimmt. Um eine zufriedenstellende Benetzbarkeit zu erzielen, ist es zweckmäßig, dem Gleitmittel als Netzmittel ca. 2 Gew.% eines Tensides beizufügen.

Bei Bedarf kann das Gleitmittel zur Verminderung von Kosten gegebenenfalls auch in der Weise hergestellt werden, daß der Polyglykol-bzw. Polyglykoläther-Anteil zu etwa einem Drittel durch Wasser ersetzt wird. Es hat sich als besonders günstig erwiesen, als Metallseife Zinkseife einzusetzen.

Das Gleitmittel sollte in Schichtdicken aufgetragen werden, die in einem Bereich zwischen 0,1 und 0,8 mm liegen.

Das erfindungsgemäße Gleitmittel bietet den Vorteil einer sehr langen Lagerfähigkeit und einer umfassenden Gummiverträglichkeit. Darüber hinaus sind mit ihm bei einem Notlauf eines Fahrzeugrades sehr hohe Kilometerleistungen erzielbar.

Das Gleitmittel kann an der Innenwand des Reifens unterhalb vom Laufstreifen oder auf Stützflächen der Felge oder sonstiger Stützkörper, z.B. an starren Stützringen oder an Stützschläuchen angebracht sein. Bei Bedarf kann es selbstverständlich auch an anderen Stellen des Reifens oder der Felge zum Einsatz kommen, auch an Felge und Reifen gleichzeitig.

Nachfolgend wird ein Ausführungsbeispiel der Erfindung anhand einer Zeichnung erläutert.

Es zeigt:

Fig. 1 ein Fahrzeugrad mit einem Gleitmittelbelag (schematisch) auf der Reifeninnenwand unterhalb vom Laufstreifen in einem radialen Teilschnitt,

Fig. 2 einen Ausschnitt des Rades gemäß Fig. 1 im Bereich der Felge mit einem Gleitmittelbelag auf der Felgenmantelfläche (schematisch).

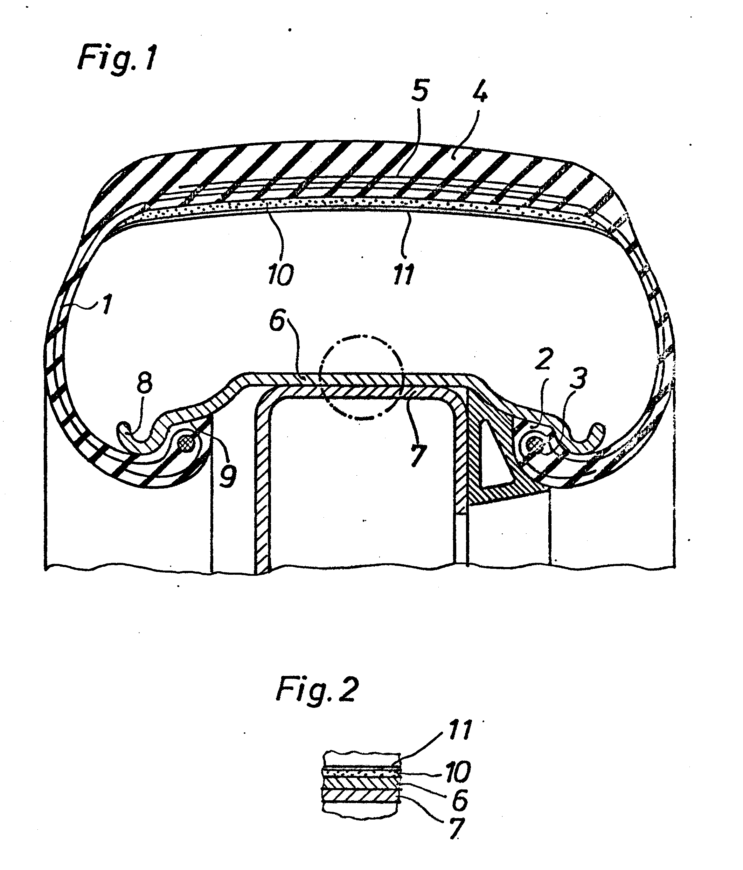

Der beim Rad gemäß Fig. 1 verwendete Fahrzeugluftreifen, der im wesentlichen aus Gummi oder gummiähnlichen Stoffen besteht, weist eine Radialkarkasse 1 auf, die in den Wülsten 2 durch Umschlingen der zugfesten Wulstkerne 3 verankert ist. Unterhalb des Laufstreifens 4 zwischen diesem und der Karkasse 1 befindet sich ein in Umfangsrichtung zugfester, aus zwei oder mehreren Cordgewebelagen bestehender Gürtel 5, der die Seitenstabilisierung des Reifenkörpers bewirkt.

Der aus Metall bestehende Felgenkranz 6 ist in bekannter Weise an einer Schüssel 7 angeschweißt. Dieser Felgenkranz 6 dient zur Halterung der Reifenwülste 2 und zur Abstützung des Reifens bei einem Notlauf, d.h. bei einem Fahrbetrieb nach einem Defekt, wenn die Luft aus dem Reifen entwichen ist. Der Felgenkranz 6 weist im Querschnitt gesehen seitlich außen je ein Felgenhorn 8 auf, das sich radial nach innen erstreckt. Am inneren Umfang des Felgenkranzes 6 liegt in axialer Richtung innen neben jedem Felgenhorn 8 eine Sitzfläche 9 für den Reifen.

Auf der radial äußeren Seite ist der Felgenkranz 6 in einem überaus breiten Mittenbereich mit einer nahezu zylinderförmigen Mantelfläche versehen, die in Querrichtung leicht gewölbt verlaufen kann, so daß im Defektfall die Zenitpartie des Reifens sich ohne wesentliche Formänderungen voll auf ihr abstützen kann. Da gleichzeitig der Reifen in seinen Seitenwandbereichen nach außen ausbauchen kann, ist gewährleistet, daß im Defektfall keine Knickstellen am Reifen entstehen.

Zur Verhinderung einer übermäßigen Erwärmung aufgrund einer Reibung zwischen Reifen und Mantelfläche des Felgenkranzes 6 ist der Reifen an seiner Innenwand im Bereich unterhalb vom Laufstreifen mit einer Gleitmittelschicht 10 versehen. Die Gleitmittelschicht setzt sich im vorliegenden Beispiel aus 70 Gew.% eines niedermolekularen Polyglykols, 28 Gew.% Zinkseife und 2 Gew.% eines nichtionischen Tensides (Netzmittel) zusammen. Es kommen auch andere prozentuale Zusammensetzungen in Frage, wobei jedoch das Polyglykol in einem Anteil von 50 bis 80 Gew.% und die Metallseife entsprechend in einem Anteil von 50 bis 20 Gew.% vorliegen sollten. Gegebenenfalls kann statt des Polyglykols auch ein Polyglykoläther zum Einsatz kommen. Für den Netzmittelanteil kommen 1 bis 5 Gew.% eines Tensides in Frage, bevorzugt 1 bis 3 Gew.% eines nichtionischen Tensides.

Zur Herstellung des Gleitmittels wird zunächst das Netzmittel dem flüssigen Polyglykol beigefügt. Danach wird die Zinkseife in die Flüssigkeit eingerührt, bis sie darin in gleichmäßiger Verteilung vorliegt.

Es hat sich gezeigt, daß für die Gleitmittelschicht Dicken von 1/10 bis maximal 8/10 mm vollkommen ausreichen, so daß bezüglich der Energiebilanz die Gewichtserhöhung am Reifen vernachlässigbar ist.

Fahrzeugräder der vorstehend beschriebenen Art, deren Reifen mit einem solchen Gleitmittelbelag 10 versehen waren, wurden an ein Fahrzeug montiert, mit dem bei nicht aufgepumpten Reifen zunächst eine Strecke von 50 km mit einer Geschwindigkeit von 40 km/h zurückgelegt wurde und danach 100 km mit einer Geschwindigkeit von 80 km/h gefahren wurden. Eine sich anschließende Untersuchung der Reifen ergab, daß sowohl die Reifen als auch die Gleitmittelschichten 10 voll funktionsfähig geblieben waren. In Einzelfällen wurden Kilometerleistungen von weit über 400 km erreicht, ohne daß die reibungsbeanspruchten Teile der Innenseele des Reifens beschädigt waren.

Um bei der Montage der Reifen eine bessere Handhabung zu erzielen, z.B. den Monteur vor einer Beschmutzung durch das Gleitmittel zu schützen, kann die Gleitmittelschicht 10 bei Bedarf mittels einer extrem dünnen, eventuell perforierten Folie 11, z.B. einer Polyäthylenfolie abgedeckt sein.

Fig. 2 zeigt einen Ausschnitt des Rades nach Fig. 1 im Felgenbereich, wobei die Mantelfläche der Felge mit einem Gleitmittel der oben beschriebenen Art und gegebenenfalls mit einer Abdeckfolie 11 versehen ist. Das Gleitmittel kann sich bei dem beschriebenen Rad entweder nur am Reifen oder nur an der Felge oder an beiden befinden.

## Ansprüche

1. Gleitmittel für ein Fahrzeugrad zur Verminderung der Reibung zwischen der Reifeninnenwand und der Felge oder sonstigen Teilen des Fahrzeugrads, das unter anderem Polyglykol und/oder Polyglykoläther enthält, dadurch gekennzeichnet, daß das Gleitmittel 50 bis 80 Gew.% Polyglykol und/oder Polyglykoläther und weiterhin 50 bis 20 Gew.% einer Metallseife enthält.

2. Gleitmittel nach Anspruch 1, dadurch gekennzeichnet, daß das Gleitmittel etwa 70 Gew.% Polyglykol und/oder Polyglykoläther und weiterhin etwa 30 Gew.% einer Metallseife enthält.

3. Gleitmittel nach Anspruch 1, dadurch gekennzeichnet, daß dem Gleitmittel 1 bis 5 Gew.% eines Tensides beigefügt sind.

4. Gleitmittel nach Anspruch 1 oder 3, dadurch gekennzeichnet, daß dem Gleitmittel 1 bis 3 Gew.% eines nichtionischen Tensides beigefügt sind.

5. Gleitmittel nach Anspruch 1, dadurch gekennzeichnet, daß der Polyglykol-oder Polyglykoläther-Anteil zu etwa 1/3 durch Wasser ersetzt ist.

6. Gleitmittel nach Anspruch 1, dadurch gekennzeichnet, daß es aus 50 bis 80 Gew.% Polyglykoläther und 50 bis 20 Gew.% Metallseife besteht.

7. Gleitmittel nach Anspruch 1, dadurch gekennzeichnet, daß als Metallseife Zinkseife eingesetzt ist.

8. Gleitmittel nach Anspruch 1, dadurch gekennzeichnet, daß es sich auf der Innenseele eines Reifens oder auf dem Felgenkranz oder einem sonstigen Teil des Fahrzeugrads in einer Schichtdicke befindet, die im Bereich zwischen 0,1 und 0,8 mm liegt.

**Fig. 1**

5  4

10  11

1

6

8

9

2  3

7

**Fig. 2**

11
10
6
7

Continental
Gummi — Werke AG
Hannover

85-50 P